# EUROPÄISCHE PATENTSCHRIFT

(11) **EP 3 487 934 B1**
(45) Veröffentlichungstag und Bekanntmachung des Hinweises auf die Patenterteilung: **01.02.2023**
(21) Anmeldenummer: 17743016.2
(22) Anmeldetag: 21.07.2017
(51) Int. Cl.: C08L 69/00

(54) **KRATZFESTE POLYCARBONAT-ZUSAMMENSETZUNGEN MIT GUTER THERMISCHER STABILITÄT**
SCRATCH-RESISTANT POLYCARBONATE COMPOSITIONS WITH GOOD THERMAL STABILITY
COMPOSITIONS DE POLYCARBONATE RESISTANTES AUX RAYURES AYANT UNE BONNE STABILITE THERMIQUE

(30) Priorität: 22.07.2016 EP 16180715
(43) Veröffentlichungstag der Anmeldung: 29.05.2019
(73) Patentinhaber: Covestro Intellectual Property GmbH & Co. KG, 51373 Leverkusen (DE)
(72) Erfinder: PUPOVAC, Kristina, 40213 Düsseldorf (DE); KLANKERS, Hans-Jürgen, 51375 Leverkusen (DE)
(74) Vertreter: Levpat
(86) Internationale Anmeldenummer: PCT/EP2017/068528
(87) Internationale Veröffentlichungsnummer: WO 2018/015557

(56) Entgegenhaltungen:
- DE-A1-102006 055 478
- DATABASE WPI Week 201612 Thomson Scientific, London, GB; AN 2016-003274 XP002765835, & CN 105 176 037 A (NINGBO HAIYU NEW MATERIAL TECHNOLOGY CO) 23. Dezember 2015 (2015-12-23)

## Beschreibung

Die vorliegende Erfindung betrifft schlagzähmodifizierte Polycarbonat-Zusammensetzungen, die Verwendung der Zusammensetzungen zur Herstellung von Formkörpern sowie die Formkörper selbst.

Aus Zusammensetzungen enthaltend Polycarbonat und polymere Blendpartner wie Vinyl(co)polymerisate oder Polyester werden für eine Vielzahl von Anwendungen Formkörper hergestellt, beispielsweise im Automobilbereich, im Bausektor, im Bereich der Elektro/Elektronik und bei Haushaltsgeräten. Durch die genaue Rezeptur lassen sich die Zusammensetzungen und damit auch die daraus hergestellten Formkörper in weiten Bereichen hinsichtlich ihrer thermischen, rheologischen und mechanischen Eigenschaften an die Anforderungen der jeweiligen Anwendung anpassen.

Polycarbonat und die aus Polycarbonat-Zusammensetzungen hergestellten Formkörper weisen aber bekanntermaßen im Vergleich zu anderen Thermoplasten wie etwa Polymethylmethacrylat eine geringere Oberflächenhärte und damit eine höhere Empfindlichkeit gegenüber Verkratzen auf. Kratzer auf der Bauteiloberfläche werden besonders auf hochglänzenden Formkörpern leicht sichtbar und als störend empfunden. Deshalb werden Formkörper aus Polycarbonat-Zusammensetzungen häufig mit einer kratzfesten Lackierung versehen.

Eine solche Oberflächenbeschichtung bedeutet aber einen zusätzlichen Verarbeitungsschritt und erhöht somit die Bauteilkosten. Es wurden daher verschiedene Ansätze verfolgt, um Polycarbonat-Zusammensetzungen an sich hinsichtlich ihrer Kratzfestigkeit zu verbessern.

WO 2008/082225 A1 offenbart Zusammensetzungen enthaltend 100 Gewichtsteile eines Thermoplasten (A) und 0.1 bis 50 Gewichtsteile an Metalloxid Nanopartikeln, die eine mit einem organischen Silan modifizierte Oberfläche aufweisen und hinsichtlich der Kratzfestigkeit verbessert sind.

WO 2013/079599 A1 offenbart eine thermoplastische Formmasse aus Polycarbonat und anorganischen Füllstoffen, die neben erhöhter Steifigkeit eine hohe Schlagzähigkeit, Bruchdehnung auch eine gute Kratzfestigkeit aufweist, die auch bei der Verarbeitung zu Formteilen mit Hochglanzoberflächen Bestand hat.

CN 105176037 A offenbart eine Polycarbonat-Zusammensetzung enthaltend ABS, Verstärkungsadditiv, Antioxidant und Entformungsmittel. Das Verstärkungsadditiv enthält Kieselsäureteilchen mit einer Teilchengröße von 2-4 µm. Die Zusammensetzung zeichnet sich durch eine gute Tieftemperaturzähigkeit, Festigkeit und Wärmeformbeständigkeit aus.

WO 2008/061644 A offenbart schlagzähmodifizierte Zusammensetzungen enthaltend aromatisches Polycarbonat und/oder aromatisches Polyestercarbonat, kautschukmodifiziertes Pfropfpolymerisat, Hohlglaskugeln, phosphorhaltiges Flammschutzmittel, Vinyl(Co)Polymerisat und/oder Polyalkylenterephthalat und Zusatzstoffe, welche sich durch eine verbesserte Fließfähigkeit, eine hohe Steifigkeit und eine geringe Verarbeitungsschwindung bei unverändert hoher Kratzfestigkeit auszeichnen.

WO 2011/073291 A1 beschreibt flammgeschützte, schlagzähmodifizierte und kratzfeste Polycarbonat-Zusammensetzungen mit oberflächenmodifiziertem, kalzinierten Kaolin als Füllstoff, die gute mechanische Eigenschaften, gute Fließfähigkeit und hohe Chemikalienbeständigkeit aufweisen.

WO 2011/073290 A1 offenbart kratzfeste und schlagzähmodifizierte Polycarbonat-Zusammensetzungen mit guten mechanischen Eigenschaften und hoher Chemikalienbeständigkeit. Die Zusammensetzungen enthalten eine harte anorganische Verbindung und ein Polyorganosiloxan-Kielsegel Compound.

Keines der aufgeführten Dokumente offenbart, wie sich die die Kratzfestigkeit verbessernden Zusatzstoffe auf die thermische Stabilität der Polycarbonat-Zusammensetzungen auswirkt. Weiterhin ist die erzielte Verbesserung der Kratzfestigkeit besonders für Hochglanzanwendungen nicht ausreichend.

Es war daher wünschenswert, Polycarbonat-Zusammensetzungen bereitzustellen, die sich durch eine gute thermische Stabilität auszeichnen und aus denen sich Formkörper mit einem hohen Glanzgrad und einer verbesserten Kratzfestigkeit herstellen lassen.

Es war im Besonderen wünschenswert, Polycarbonat-Zusammensetzungen bereitzustellen, die sich durch einen guten Glanzerhalt von Hochglanzformkörpern nach einem Abriebtest in Anlehnung an DIN EN 13300 sowie einer hohen Stabilität der Schmelzevolumenfließrate bei einer Lagerung unter hohen Temperaturen auszeichnen.

Es wurde nun überraschenderweise gefunden, dass Zusammensetzungen enthaltend
A) 50 bis 90 Gew.-%, bevorzugt 55 bis 85 Gew.-%, besonders bevorzugt 60 bis 80 Gew.-% mindestens eines Polymers ausgewählt aus der Gruppe bestehend aus aromatisches Polycarbonat auf Basis von Bisphenol A mit einer gewichtsgemittelten Molmasse M_{w} von 24 kg/mol bis 33 kg/ mol bestimmt durch Gelpermeationschromatographie in Methylenchlorid mit Polycarbonat als Standard, aromatisches Polyestercarbonat und Polyester ,
B) 5 bis 40 Gew.-%, bevorzugt 7 bis 35 Gew.-%, besonders bevorzugt 8 bis 30 Gew.-% mindestens eines kautschukmodifizierten Pfropfpolymerisats,
C) 1 bis 20 Gew.-*%*, bevorzugt 3 bis 18 Gew.-*%*, besonders bevorzugt 4 bis 16 Gew.-*%* Quarzgut mit einer mittleren Partikelgröße d₅₀ von 1,0 bis 10,0 µm, bevorzugt 2,0 bis 6,0 µm und besonders bevorzugt von 3,0 bis 5,0 µm und einem Gehalt an Metalloxiden ≤ 2 Gew.-*%*, bevorzugt ≤ 1,5 Gew.-*%* besonders bevorzugt ≤ 1 Gew.-% bezogen auf Komponente C,
D) 0 bis 20 Gew.-*%*, bevorzugt, 0 bis 15 Gew.-*%*, besonders bevorzugt 0 bis 10 Gew.-*%* mindestens eines von Komponente C verschiedenen Additivs,
die vorteilhaften Eigenschaften aufweisen.

Die Gew.-*%* Angaben der Komponenten A bis D beziehen sich auf 100 Gew.-*%* der anspruchsgemäßen Zusammensetzungen.

Die Anteile der Komponenten A bis D sind so ausgewählt, dass die Summe der Gew.-*%* der einzelnen Komponenten 100 Gew.-*%* nicht übersteigt.

In einer besonderen Ausführungsform bestehen die Zusammensetzungen aus den Komponenten A bis D und die Anteile der Komponenten sind so ausgewählt, dass die Summe der Gew.-*%* 100 ist.

Für einige Anwendungen, beispielweise hochglänzende Innenbauteile von Automobilen, ist es weiterhin von Vorteil, wenn die Formkörper eine gute Beständigkeit gegenüber Sonnencreme aufweisen.

In einer bevorzugten Ausführungsform enthält die Komponente A ein aromatisches Polycarbonat auf Basis von Bisphenol A mit einer gewichtsgemittelten Molmasse M_{w} von 24 kg/mol bis 33 kg/ mol bestimmt durch Gelpermeationschromatographie in Methylenchlorid mit Polycarbonat als Standard und einen Polyester. Wenn die Komponente A einen Polyester enthält, dann wird dieser bevorzugt in einem Anteil von 15 bis 50 Gew.-*%*, weiter bevorzugt in einem Anteil von 20 bis 45 Gew.-*%* bezogen auf die anspruchsgemäße Zusammensetzung eingesetzt.

Die Erfindung betrifft auch kratzfeste Formkörper mit einem Oberflächenglanz von mindestens 95 unter einem Betrachtungswinkel von 60° mit einer Bewertung der Sonnencremebeständigkeit gemäß BMW-Prüfvorschrift PR551 (Stand 2014) mit einem Sonnenmilch Testgemisch nach DBL 7384 von mindestens 6. Bei diesen Formkörpern wird die Kratzfestigkeit in Anlehnung an DIN EN 13300 an den Hochglanz-Platten mit Bürstenköpfen aus Schweineborsten (DIN 53778) unter Trockenverfahren (Trockenabrieb) und insgesamt zehn Zyklen (Hübe) durchgeführt. Als kratzfeste Formkörper sind solche Formkörper zu verstehen, die unter diesen Prüfbedingungen weniger als 15 % Glanz verlieren.

### Komponente A

Als Komponente A werden aromatische Polycarbonate auf Basis von Bisphenol A mit einer gewichtsgemittelten Molmasse M_{w} von 24 kg/mol bis 33 kg/ mol bestimmt durch Gelpermeationschromatographie in Methylenchlorid mit Polycarbonat als Standard, Polyestercarbonate und Polyester eingesetzt.

In einer Ausführungsform werden nur aromatische Polycarbonate auf Basis von Bisphenol A mit einer gewichtsgemittelten Molmasse M_{w} von 24 kg/mol bis 33 kg/ mol bestimmt durch Gelpermeationschromatographie in Methylenchlorid mit Polycarbonat als Standard als Komponente A eingesetzt. In einer bevorzugten Ausführungsform werden Mischungen aus diesen aromatischen Polycarbonaten und Polyestern eingesetzt. Wenn solche Mischungen verwendet werden, dann beträgt der Anteil an Polyestern 15 bis 50 Gew.-*%*, bevorzugt 20 bis 45 Gew.-*%*, bezogen auf die anspruchsgemäßen Zusammensetzungen aus den Komponenten A, B, C und D.

Erfindungsgemäß geeignete aromatische Polycarbonate und Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate und Polyestercarbonate erfolgt z. B. durch Umsetzung von 2,2-Bis-(4-hydroxyphenyl)-propan (Bisphenol-A) mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Bisphenol A mit beispielsweise Diphenylcarbonat möglich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol*%*, und 10 Mol%, bezogen auf die Molsumme der jeweils eingesetzten Diphenole.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol*%*, insbesondere bis zu 80 Mol*%*, besonders bevorzugt bis zu 50 Mol*%*, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt bevorzugt im Bereich 1,18 bis 1,4, besonders bevorzugt im Bereich 1,20 bis 1,32 (gemessen nach DIN 51652 in der Version von 1999 an Lösungen von 0,5 g Polycarbonat oder Polyestercarbonat in 100 ml Methylenchlorid bei 25°C). Das gewichtsgemittelte Molekulargewicht Mw der aromatischen Polyestercarbonate liegt bevorzugt im Bereich von 15 bis 36kg/mol, weiter bevorzugt im Bereich von 20bis 34kg/mol, besonders bevorzugt 24bis 33kg/mol, bestimmt durch GPC (Gelpermeationschromatographie in Methylenchlorid mit Polycarbonat als Standard).

Das gewichtsgemittelte Molekulargewicht Mw der aromatischen Polycarbonate auf Basis von Bisphenol A liegt im Bereich von 24 bis 33kg/mol, bestimmt durch GPC (Gelpermeationschromatographie in Methylenchlorid mit Polycarbonat als Standard).

Als Bestandteil der Komponente A infrage kommende Polyester sind in bevorzugter Ausführungsform aromatisch, weiter bevorzugt handelt es sich um Polyalkylenterephthalate.

Es handelt sich hierbei in besonders bevorzugter Ausführungsform um Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-*%*, vorzugsweise mindestens 90 Gew.-*%*, bezogen auf die Dicarbonsäurekomponente Terephthalsäurereste und mindestens 80 Gew.-*%*, vorzugsweise mindestens 90 Gew-*%*, bezogen auf die Diolkomponente Ethylenglykol- und/oder Butandiol-1,4-Reste.

Die bevorzugten Polyalkylenterephthalate können neben Terephthalsäureresten bis zu 20 mol-*%*, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldi-carbonsäure, Bernsteinsäure, Adipinsäure, Sebacinsäure, Azelainsäure, Cyclohexandiessigsäure.

Die bevorzugten Polyalkylenterephthalate können neben Ethylenglykol bzw. Butandiol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxy-cyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.- %, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen bevorzugt eine intrinsische Viskosität von 0,4 bis 1,5 dl/g, vorzugsweise 0,5 bis 1,2 dl/g im Ubbelohde-Viskosimeter gemessen in Dichloressigsäure in einer Konzentration von 1 Gew.-% bei 25°C gemäß DIN 53728-3. Die ermittelte intrinsische Viskosität ist berechnet aus der gemessenen spezifischen Viskosität x 0,0006907 + 0,063096.

Besonders bevorzugt wird als Polyester Polybutylenterephthalat verwendet.

Die besonders bevorzugten Polybutylenterephthalate weisen eine Schmelzfließrate gemessen nach DIN EN ISO 1133 bei 250°C und 2,16 kg Belastung von 9 g/10min bis 60 g/10min auf.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente B

Bei der Komponente B handelt es sich um ein kautschukmodifiziertes Pfropfpolymerisat. Die Komponente B kann weiterhin kautschukfreies Vinyl(co)polymerisat enthalten.

Kautschukmodifizierte Vinyl(co)polymerisate gemäß Komponente B sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Komponente B umfasst Pfropfpolymerisate, hergestellt im Emulsionspolymersiationsverfahren (Komponente B1) und optional zusätzlich kautschukmodifizierte Pfropfpolymerisate, hergestellt im Masse-, Lösungs- oder Suspensionspolymerisationsverfahren (Komponente B2). Herstellungsbedingt enthalten die Komponenten B1 und B2 freies, d.h. nicht an die Kautschukgrundlage gebundenes Vinyl(co)polymerisat. Kautschukfreies Vinyl(co)polymerisat kann auch als separate Komponente zugegeben werden (Komponente B3).

In bevorzugter Ausführungsform besteht die Komponente B nur aus B1.

In einer weiteren bevorzugten Ausführungsform enthalten die erfindungsgemäßen Zusammensetzungen 5 bis 15 Gew.-% B1 bezogen auf die anspruchsgemäßen Zusammensetzungen aus den Komponenten A, B, C und D.

### Komponente B1

Bei der Komponente B1 handelt es sich um Pfropfpolymerisate, hergestellt im Emulsionspolymersiationsverfahren, von
B1.1) 5 bis 95 Gew.-%, vorzugsweise 10 bis 70 Gew.-%, besonders bevorzugt 20 bis 60 Gew.-%, bezogen auf die Komponente B1, einer Mischung aus
B1.1.1) 65 bis 85 Gew.-%, bevorzugt 70 bis 80 Gew.-%, bezogen auf B1.1, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat) und
B1.1.2) 15 bis 35 Gew.-%, bevorzugt 20 bis 30 Gew.-%, bezogen auf B1.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid) auf
B1.2) 95 bis 5 Gew.-%, vorzugsweise 90 bis 30 Gew.-%, besonders bevorzugt 80 bis 40 Gew.-%, bezogen auf die Komponente B1, wenigstens einer elastomeren Pfropfgrundlage.

Die Pfropfgrundlage hat bevorzugt eine Glasübergangstemperatur < 0°C, weiter bevorzugt < -20°C, besonders bevorzugt <-60°C.

Glasübergangstemperaturen werden im Rahmen der vorliegenden Patentanmeldung mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.

Die Mischung B.1.1 wird im Rahmen der vorliegenden Patentanmeldung auch als Pfropfauflage der Komponente B.1 bezeichnet.

Die Pfropfpartikel in der Komponente B1 weisen bevorzugt eine mittlere Teilchengröße (d₅₀-Wert) von 0,05 bis 5 µm, vorzugsweise von 0,1 bis 1,0 µm, besonders bevorzugt von 0,2 bis 0,5 µm auf.

Die mittlere Teilchengröße d₅₀ ist der Durchmesser, oberhalb und unterhalb dessen jeweils 50 Gew.- % der Teilchen liegen. Sie wird im Rahmen der vorliegenden Patentanmeldung mittels Ultrazentrifugenmessung (W. Scholtan, H. Lange, Kolloid, Z. und Z. Polymere 250 (1972), 782-1796) bestimmt.

Bevorzugte Monomere B1.1.1 sind ausgewählt aus mindestens einem der Monomere Styrol, α-Methylstyrol und Methylmethacrylat, bevorzugte Monomere B1.1.2 sind ausgewählt aus mindestens einem der Monomere Acrylnitril, Maleinsäureanhydrid und Methylmethacrylat.

Besonders bevorzugte Monomere sind B1.1.1 Styrol und B1.1.2 Acrylnitril sowie B.1.1.1 = B.1.2.2 = Methylmethacrylat.

Für die Pfropfpolymerisate B1 geeignete Pfropfgrundlagen B1.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) miteinander verknüpft sind.

Bevorzugte Pfropfgrundlagen B1.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß B1.1.1 und B1.1.2) und Mischungen aus den zuvor genannten Kautschuktypen. Besonders bevorzugt sind reiner Polybutadienkautschuk und Styrol-Butadien-Blockcopolymerkautschuk.

Pfropfpolymerisat gemäß Komponente B1 sind vorzugsweise ABS- Polymerisate hergestellt im Emulsionspolymerisationsverfahren, wie sie z.B. in Ullmanns, Enzyklopädie der Technischen Chemie, Bd. 19 (1980), S. 280 ff. beschrieben sind.

Vorzugsweise weist das Pfropfpolymerisat aus den Komponenten B1.1 und B1.2 eine Kern-Schale-Struktur auf, wobei die Komponente B.1 die Schale bildet (auch als Hülle bezeichnet) und die Komponente B.2 den Kern ausbildet (siehe bspw. Ullmann's Encyclopedia of Industrial Chemistry, VCH-Verlag, Vol. A21, 1992, Seite 635 und Seite 656.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Weitere besonders geeignete Pfropfpolymerisate B1 sind MBS-Modifikatoren mit Kern-Schale-Struktur.

Der Gelanteil der Pfropfpolymerisate beträgt mindestens 40 Gew.-%, bevorzugt mindestens 60 Gew.-%, besonders bevorzugt mindestens 75 Gew.-% (gemessen in Aceton).

Der Gelgehalt der Pfropfpolymerisate wird, soweit in der vorliegenden Erfindung nicht anders angegeben, bei 25°C als in Aceton als Lösungsmittel unlöslicher Anteil bestimmt (M. Hoffmann, H. Krömer, R. Kuhn, Polymeranalytik I und II, Georg Thieme-Verlag, Stuttgart 1977).

Die Pfropfpolymerisate B1 werden hergestellt durch radikalische Polymerisation.

Das Pfropfpolymerisat B1 umfasst herstellungsbedingt im Allgemeinen freies, d.h. nicht chemisch an die Kautschukgrundlage gebundenes Copolymerisat aus B1.1.1 und B1.1.2, welches sich dadurch auszeichnet, dass es in geeigneten Lösungsmitteln (z.B. Aceton) gelöst werden kann.

Bevorzugt enthält die Komponente B 1 ein freies Copolymerisat aus B1.1.1 und B1.1.2, welches ein gewichtsgemitteltes Molekulargewicht (Mw), bestimmt per Gelpermeationschromatographie in Tetrahydrofuran mit Polystyrol als Standard, von 20 bis 180 kg/mol, bevorzugt 30 bis 150 kg/mol, besonders bevorzugt von 40 bis 140 kg/mol aufweist.

### Komponente B2

Als Komponente B2 können die erfindungsgemäßen Zusammensetzungen optional kautschukmodifizierte Pfropfpolymerisate, hergestellt im Masse-, Lösungs- oder Suspensionspolymerisationsverfahren enthalten. Hierbei handelt es sich um Pfropfpolymerisate von
B2.1) 5 bis 95 Gew.-%, vorzugsweise 80 bis 93 Gew.-%, besonders bevorzugt 85 bis 92 Gew.-%, ganz besonders bevorzugt 87 bis 93 Gew.-%, bezogen auf die Komponente B2, einer Mischung aus
B2.1.1) 65 bis 85 Gew.-%, bevorzugt 70 bis 80 Gew.-%, bezogen auf die Mischung B.2.1, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat) und
B2.1.2) 15 bis 35 Gew.-%, bevorzugt 20 bis 30 Gew.-% bezogen auf die Mischung B2.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
   auf
B2.2) 95 bis 5 Gew.-%, vorzugsweise 20 bis 7 Gew.-%, besonders bevorzugt 15 bis 8 Gew.-%, ganz besonders bevorzugt 13 bis 7 Gew.-%, bezogen auf die Komponente B2,
wenigstens einer Pfropfgrundlage.

Die Pfropfgrundlage hat vorzugsweise eine Glasübergangstemperatur < 0°C, bevorzugt < -20°C, besonders bevorzugt < -60°C.

Die Mischung B.2.1 wird im Rahmen der vorliegenden Patentanmeldung auch als Pfropfauflage der Komponente B.2 bezeichnet.

Die Pfropfpartikel in der Komponente B2 weisen bevorzugt eine mittlere Teilchengröße (D50-Wert) von 0,1 bis 10 µm, vorzugsweise von 0,2 bis 2 µm, besonders bevorzugt von 0,3 bis 1,0 µm, ganz besonders bevorzugt von 0,3 bis 0,9 µm auf.

Bevorzugte Monomere B2.1.1 sind ausgewählt aus mindestens einem der Monomere Styrol, α-Methylstyrol und Methylmethacrylat, bevorzugte Monomere B2.1.2 sind ausgewählt aus mindestens einem der Monomere Acrylnitril, Maleinsäureanhydrid und Methylmethacrylat.

Besonders bevorzugte Monomere sind B2.1.1 Styrol und B2.1.2 Acrylnitril.

Für die Pfropfpolymerisate B2 geeignete Pfropfgrundlagen B2.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) miteinander verknüpft sind.

Bevorzugte Pfropfgrundlagen B2.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß B2.1.1 und B2.1.2) und Mischungen aus den zuvor genannten Kautschuktypen. Besonders bevorzugt als Pfropfgrundlage B2.2 sind Styrol-Butadien-Blockcopolymerkautschuke und Mischungen von Styrol-Butadien-Blockcopolymerkautschuken mit reinem Polybutadienkautschuk.

Der Gelanteil der Pfropfpolymerisate B2 beträgt vorzugsweise 10 bis 35 Gew.-%, besonders bevorzugt 15 bis 30 Gew.-%, ganz besonders bevorzugt 17 bis 23 Gew.-% (gemessen in Aceton).

Besonders bevorzugte Polymerisate B2 sind z.B. ABS-Polymerisate hergestellt durch radikalische Polymerisation, welche in bevorzugter Ausführungsform bis zu 10 Gew.-%, besonders bevorzugt bis zu 5 Gew.-%, besonders bevorzugt 2 bis 5 Gew.-%, jeweils bezogen auf das Pfropfpolymerisat B2, an n-Butylacrylat enthalten.

Das Pfropfpolymerisat B2 umfasst im Allgemeinen herstellungsbedingt freies, d.h. nicht chemisch an die Kautschukgrundlage gebundenes Copolymerisat aus B2.1.1 und B2.1.2, welches sich dadurch auszeichnet, dass es in geeigneten Lösungsmittel (z.B. Aceton) gelöst werden kann.

Bevorzugt enthält die Komponente B2 freies Copolymerisat aus B2.1.1 und B2.1.2, welches ein gewichtsgemitteltes Molekulargewicht (Mw), bestimmt per Gelpermeationschromatographie in Tetrahydrofuran mit Polystyrol als Standard, von bevorzugt 50 bis 200 kg/mol, besonders bevorzugt von 70 bis 150 kg/mol, besonders bevorzugt von 80 bis 140 kg/mol aufweist.

### Komponente B3

Die Zusammensetzung kann als weitere Komponente B3 optional (Co)Polymerisate von mindestens einem Monomeren aus der Gruppe der Vinylaromaten, Vinylcyanide (ungesättigte Nitrile), (Meth)Acrylsäure-(C1 bis C8)-Alkylester, ungesättigte Carbonsäuren sowie Derivate (wie Anhydride und Imide) ungesättigter Carbonsäuren enthalten.

Insbesondere geeignet sind als Komponente B3 (Co)Polymerisate aus
B3.1 50 bis 99 Gew.-%, bevorzugt 65 bis 85 Gew.-%, besonders bevorzugt 70 bis 80 Gew.-% bezogen auf das (Co)Polymerisat B3 mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und
B3.2 1 bis 50 Gew.-%, bevorzugt 15 bis 35 Gew.-%, besonders bevorzugt 20 bis 30 Gew.-% bezogen auf das (Co)Polymerisat B3 mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate B3 sind harzartig, thermoplastisch und kautschukfrei. Besonders bevorzugt ist das Copolymerisat aus B3.1 Styrol und B3.2 Acrylnitril.

Derartige (Co)Polymerisate B3 sind bekannt und lassen sich durch radikalische Polymerisation, insbesondere durch Emulsions-, Suspensions-, Lösungs- oder Massepolymerisation herstellen.

Die (Co)Polymerisate B3 besitzen ein gewichtsgemitteltes Molekulargewicht (Mw), bestimmt per Gelpermeationschromatographie in Tetrahydrofuran mit Polystyrol als Standard, von bevorzugt 50 bis 200 kg/mol, besonders bevorzugt von 70 bis 150 kg/mol, besonders bevorzugt von 80 bis 140 kg/mol.

### Komponente C

Als Komponente C enthalten die thermoplastischen Formmassen einen anorganischen Füllstoff der zu über 98 Gew.-% auf der Basis von Siliciumdioxid (Quarz) aufgebaut ist. Bei der Komponente C handelt es sich bevorzugt um feinteilige Quarzgutmehle, die durch eisenfreie Mahlung mit nachfolgender Windsichtung aus elektrisch erschmolzenem Siliciumdioxid hergestellt werden.

Besonders bevorzugtes Quarzgut ist dadurch gekennzeichnet, dass der Gehalt an Metalloxiden 2 Gew.-%, bevorzugt 1,5 Gew.-% besonders bevorzugt 1 Gew.-% nicht übersteigt, wobei vorzugsweise der Gehalt an Al₂O₃ ≤ 1 Gew.-%, bevorzugt ≤ 0,6 Gew.-% besonders bevorzugt ≤ 0,3 Gew.-%, FejOs ≤ 0,1 Gew.-%, bevorzugt ≤ 0,06 Gew.-%, besonders bevorzugt ≤ 0,03 Gew.-%, CaO+MgO ≤ 0,1 Gew.-%, bevorzugt ≤ 0,06 Gew.-%, besonders bevorzugt ≤ 0,03 Gew.-% und Na₂O+K₂O ≤ 0,1 Gew.-%, bevorzugt ≤ 0,06 Gew.-%, besonders bevorzugt ≤ 0,03 Gew.-% beträgt, jeweils bezogen auf das Gesamtgewicht des Quarzgutmehls.

In einer besonderen Ausführungsform ist das Quarzgut dadurch gekennzeichnet, dass der Gehalt an Al₂O₃ 0,01 bis 1 Gew.-%, bevorzugt 0,05 bis 0,6 Gew.-% besonders bevorzugt 0,1 bis 0,3 Gew.-% beträgt.

In einer besonderen Ausführungsform ist das Quarzgut dadurch gekennzeichnet, dass der Gehalt an Fe₂O₃ 0,001 bis 0,1 Gew.-%, bevorzugt 0,005 bis 0,06 Gew.-%, besonders bevorzugt 0,01 bis 0,03 Gew.-% beträgt.

In einer besonderen Ausführungsform ist das Quarzgut dadurch gekennzeichnet, dass der Gehalt an CaO+MgO 0,001 bis 0,1 Gew.-%, bevorzugt 0,005 bis 0,06 Gew.-%, besonders bevorzugt 0,01 bis 0,03 Gew.-% beträgt.

In einer besonderen Ausführungsform ist das Quarzgut dadurch gekennzeichnet, dass der Gehalt an Na₂O+K₂O 0,001 bis 0,1 Gew.-%, bevorzugt 0,005 bis 0,06 Gew.-%, besonders bevorzugt 0,01 bis 0,03 Gew.-% beträgt.

Vorteilhaft und insofern bevorzugt ist insbesondere der Einsatz des erfindungsgemäßen Quarzgutmehls mit einer mittleren Partikelgröße d₅₀ von 1,0 bis 10,0µm, bevorzugt 2,0 bis 6,0 µm und besonders bevorzugt von 3,0 bis 5,0 µm.

Die mittlere Partikelgröße d₅₀ ist der Durchmesser, oberhalb und unterhalb dessen jeweils 50 Gew.- % der Partikel liegen. Er kann mittels Ultrazentrifugenmessung (W. Scholtan, H. Lange, Kolloid, Z. und Z. Polymere 250 (1972), 782-1796) bestimmt werden. Das erfindungsgemäß einzusetzende Quarzgut hat bevorzugt eine obere Partikel- bzw. Korngröße d₉₀ kleiner 100 µm, bevorzugt kleiner 50 µm, besonders bevorzugt kleiner 20 µm und insbesondere bevorzugt kleiner 15 µm. Die obere Partikel-bzw. Korngröße d₉₀ bezeichnet die Größe, die 90 % der Partikel bzw. Körner nicht überschreiten.

Bevorzugt weist das Quarzgutmehl eine spezifische BET-Oberfläche, bestimmt durch Stickstoffadsorption gemäß ISO 9277 (Version von 2010), von 0,6 bis 10,0 m²/g, weiter bevorzugt von 2,0 bis 8,0 m²/g und besonders bevorzugt von 5,0 bis 7,0 m²/g auf.

Insbesondere sind diejenigen Quarzgutmehle bevorzugt, die einen pH-Wert, gemessen gemäß ISO 10390 (Version von 2005) in wässriger Suspension, im Bereich 5,0 bis 8,0, bevorzugt 5,5 bis 7,0 aufweisen. Sie weisen darüber hinaus eine Ölabsorptionszahl gemäß ISO 787-5 (Version von 1995) von bevorzugt 20 bis 30 g/100g auf.

### Komponente D

Die Zusammensetzungen können als Komponente D mindestens ein von Komponente C verschiedenes Additiv enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren und Säure-/Basenquenchern), Fließfähigkeitspromotoren, Verträglichkeitsvermittlern, weiteren von Komponente B verschiedene Schlagzähigkeitsmodifikatoren (sowohl mit als auch ohne Kern-Schale-Struktur), weitere polymeren Bestandteilen (beispielsweise funktionelle Blendpartnern), Füll- und Verstärkungsstoffen (beispielsweise Karbonfasern, Talk, Glimmer, Kaolin, CaCOs) sowie Farbstoffen und Pigmenten (beispielsweise Titandioxid oder Eisenoxid).

In bevorzugter Ausführungsform sind die Zusammensetzungen frei von Flammschutzmitteln, Antidrippingmitteln, Flammschutzsynergisten und Rauchinhibitoren.

In bevorzugter Ausführungsform enthalten die Zusammensetzungen mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren von Komponente B verschiedenen Schlagzähigkeitsmodifikatoren, weiteren polymeren Bestandteilen, Farbstoffen und Pigmenten.

In bevorzugter Ausführungsform enthalten die Zusammensetzungen mindestens ein Polymeradditiv ausgewählt aus der Gruppe bestehend aus Gleit-/Entformungsmitteln und Stabilisatoren.

In bevorzugter Ausführungsform enthalten die Zusammensetzungen als Entformungsmittel Pentaerythrittetrastearat.

In bevorzugter Ausführungsform enthalten die Zusammensetzungen als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In besonders bevorzugter Ausführungsform enthalten die Zusammensetzungen als Stabilisator mindestens einen Vertreter ausgewählt aus der Gruppe bestehend aus Octadecyl 3-(3,5-di-tert-butyl-4-hydroxyphenyl)propionat, Tris(2,4-di-tert-butylphenyl)phosphit und phosphorige Säure.

Aus den erfindungsgemäßen Zusammensetzungen enthaltend die Komponenten A bis D können Formmassen hergestellt werden. Dazu werden die Komponenten in bekannter Weise vermischt und bei Temperaturen von 200°C bis 330°C in üblichen Aggregaten wie Innenknetern, Extrudern und Doppelwellenschnecken schmelzcompoundiert oder schmelzextrudiert.

Die nach dem erfindungsgemäßen Verfahren hergestellten Zusammensetzungen (Formmassen) können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die erfindungsgemäßen Zusammensetzungen eignen besonders zur Herstellung von hochglänzenden Innen- und Außenteilen für Automobile und Schienenfahrzeuge.

Eine weitere Form der Verarbeitung ist die Herstellung von Formkörpern durch Blasformen oder durch Tiefziehen aus vorher hergestellten Platten oder Folien.

Gegenstand der Erfindung ist somit auch die Verwendung der erfindungsgemäßen Zusammensetzungen zur Herstellung von Formkörpern und Formkörper oder Formteile jeglicher Art erhältlich aus den erfindungsgemäßen Zusammensetzungen.

### Beispiele

### Komponente A-1:

Lineares Polycarbonat auf Basis Bisphenol-A mit einem gewichtsgemittelten Molekulargewicht Mw von 25kg/mol (bestimmt durch GPC in Methylenchlorid mit Polycarbonatstandards).

### Komponente A-2:

Lineares Polycarbonat auf Basis Bisphenol-A mit einem gewichtsgemittelten Molekulargewicht Mw von 32kg/mol (bestimmt durch GPC in Methylenchlorid mit Polycarbonatstandards).

### Komponente A-3:

Polybutylenterephthalat (Pocan^{™} B1600, Lanxess AG) mit einer Schmelze-Volumenfließrate (MVR) von 14 cm³/10 min gemessen bei 260°C/2.16kg (ISO 1133).

### Komponente A-4:

Polybutylenterephthalat (Pocan^{™} B1300, Lanxess AG) mit einer Schmelze-Volumenfließrate (MVR) von 45 cm³/10 min gemessen bei 250°C/2.16kg (ISO 1133).

### Komponente B-1:

Acrylnitril-Butadien-Styrol (ABS)-Polymer, hergestellt im Emulsions-Polymerisationsverfahren mit einem Acrylnitril : Butadien : Styrol-Gewichtsverhältnis von 12:57:31 Gew.-%. und einer mittleren Teilchengröße d₅₀ der Pfropfgrundlage von 340 nm bestimmt durch Ultrazentrifugenmessung.

### Komponente B-2:

Schlagzähmodifikator mit einer Kern/Schale-Struktur; Kern: Polybutadien, Schale: Polymethylmethacrylat (Paraloid^{™} EXL 2690, Dow).

### Komponente B-3:

Acrylnitril-Butadien-Styrol (ABS)-Polymer, hergestellt im Emulsions-Polymerisationsverfahren mit einem A:B:S-Verhältnis von 19:25:56. Die mittlere Kautschukpartikelgröße d₅₀, gemessen per Ultrazentrifugation, beträgt 0,25 µm. Die Komponente B3 enthält freies Copolymerisat aus Styrol und Acrylnitril, welches ein gewichtsgemitteltes Molekulargewicht (Mw), bestimmt per Gelpermeationschromatographie mit Polystyrol als Standard von 130 kg/mol aufweist.

### Komponente B-4:

Acrylnitril-Butadien-Styrol (ABS)-Polymer, hergestellt im Masse-Polymerisationsverfahren mit einem A:B:S-Verhältnis von 23:10:67 Gew.-%. Die mittlere Kautschukpartikelgröße dso, gemessen per Ultrazentrifugation, beträgt 0,85 µm. Die Komponente B3 enthält freies Copolymerisat aus Styrol und Acrylnitril, welches ein gewichtsgemitteltes Molekulargewicht (Mw), bestimmt per Gelpermeationschromatographie mit Polystyrol als Standard von 125 kg/mol aufweist.

### Komponente B-5:

Styrol-Acrylnitril-Copolymerisat mit einem Acrylnitrilgehalt von 23 Gew.-% und einem gewichtsgemittelten Molekulargewicht von etwa 130 kg/mol (bestimmt durch GPC in Tetrahydrofuran mit Polystyrol als Standard).

**Komponente C-1:** Quarzgutmehl (Siliciumdioxid), Amosil^{TM} FW600 der Firma Quarzwerke GmbH mit einer mittleren Teilchengröße von d₅₀ = 4,0µm (unbeschlichtet), einem Gesamtgehalt an Metalloxiden von < 1 Gew.-% und einem Gehalt an Al₂O₃ von 0,3 Gew.-%. In wässriger Dispersion weist das Quarzgut einen pH Wert von 6 gemessen nach ISO 10390 auf. Das Quarzgutmehl weist eine spezifische BET-Oberfläche, bestimmt durch Stickstoffadsorption gemäß ISO 9277 (Version von 2010), von 6,0 m²/g auf.

**Komponente C-2:** Alkalialuminosilicat-Keramik-Mikrokugeln, Zeeospheres^{™} W-210 der Firma 3M Deutschland GmbH (Energy and Advanced Material Division) mit einer mittleren Teilchengröße von dso = 3,0µm.

**Komponente C-3:** Vinylsilanmodifiziertes kalziniertes Kaolin (Aluminiumsilikat), Burgess CB^{™} der Firma Burgess Pigment Company (USA) mit einer mittleren Teilchengröße von 1,5 µm.

**Komponente C-4:** Silfit^{™} Z91, ein Gemisch aus amorpher und kryptokristalliner Kieselsäure und lamellaren Kaolinit, das einer thermischen Behandlung unterzogen wurde (kalziniert), mit einer mittleren Teilchengröße von d₅₀ = 3,0µm (Hofmann Mineral, Deutschland) und einem SiO₂ Gehalt von 86 Gew.-% sowie einem Al₂O₃ Gehalt von 12 Gew.-%.

**Komponente D-1:** Irganox^{™} 1076 (2,6-di-tert-butyl-4-(octadecanoxycarbonylethyl)-phenol), BASF (Ludwigshafen, Deutschland).

**Komponente D-2:** Phosphorigsäureester des Bis-(2-hydroxy-3-cyclohexyl-5-methyl-phenyl)-methans, kommerziell erhältlich von Rhein Chemie Rheinau GmbH unter dem Namen *Addovate ThermoStab.*

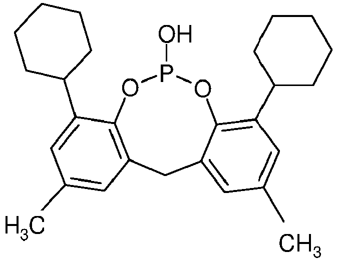

**Komponente D-3:** Phosphorige Säure (Sigma-Aldrich Chemie GmbH).

**Komponente D-4:** UV Stabilisator Tinuvin^{™} 360 (BASF). 2,2'-Methylenebis[6-(2H-benzotriazol-2-yl)-4-(1,1,3,3-tetramethylbutyl)phenol].

**Komponente D-5:** Pentaerythrittetrastearat, Loxiol^{™} P 861/3.5 Special (Emery Oleochemicals GmbH).

**Komponente D-6:** Talk, Jetfine^{™} 3CA der Firma Imerys Talc (USA) mit einem MgO-Gehalt von 32 Gew.-%, einem SiO₂-Gehalt von 61 Gew.-% und einem Al₂O₃-Gehalt von 0,3 Gew.-%., mittlere Teilchengröße d₅₀ = 1,0µm.

**Komponente D-7:** Industrieruß, Black pearls^{™} (Cabot Corporation).

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 260°C. Die Formkörper wurden bei einer Massetemperatur von 260°C und einer Werkzeugtemperatur von 150°C (Tabelle 1, Beispiele 1-7) bzw. 110°C (Tabelle 2, Beispiele 8-14) mittels variothermer Spritzgusstechnologie (Rapid Heat Cycle Molding (RHCM)) auf einer Spritzgießmaschine Typ Arburg 270 E hergestellt.

Als Maß für die thermische Stabilität der Zusammensetzung dient die Änderung des MVRs (in %) gemessen nach ISO 1133 (Version von 2012) bei 260°C mit einer Stempellast von 5 kg während einer 15-minütigen thermischen Belastung bei 300°C (Tabelle 1, Beispiele 1-7) bzw. während einer 15-minütigen thermischen Belastung bei 260°C (Tabelle 2, Beispiele 8-10, 12-13).

Der Scheuerbeständigkeitstest erfolgte mittels eines Abriebprüfgeräts der Firma BYK-Gardner (PB-5000) in Anlehnung an DIN EN 13300 (Version von 2001). Die Abriebbeständigkeit wurde an den Hochglanz-Platten (160 x 110 x 3 mm, erhalten mittels RHCM) mit Bürstenköpfen aus Schweineborsten (DIN 53778) unter Trockenverfahren (Trockenabrieb) und insgesamt zehn Zyklen (Hübe) durchgeführt. In Anlehnung bedeutet, dass abweichend von der Norm ein Trockenverfahren (Trockenabrieb) verwendet wurde und zehn Zyklen (Hübe) durchgeführt wurden. Anschließend wurde der Glanzgrad gemessen. Als Maß für die Kratzbeständigkeit dient die Änderung des Glanzgrades (in %) gemessen mittels Glanzgradmessgeräts (Reflektometer) bei einem Messwinkel von 60° der Firma BYK-Gardner.

Die Sonnencremebeständigkeit wurde nach der BMW-Prüfvorschrift PR551 (Stand 2014) mit einem Sonnenmilch Testgemisch nach DBL 7384 durchgeführt. Der Probekörper (Hochglanz-Platte) wurde mit der Prüfcreme durch Auftropfen belastet, wobei die Größe des Tropfens einen Durchmesser von ø 7-10mm hatte. Anschließend wurde der Probekörper im Wärmeofen bei 60±2°C für 24h gelagert. Die Probekörper wurden waagerecht gelagert und die Tropfen waren mindestens 12mm von den Probenkanten entfernt. Die Bewertung erfolgte visuell nach den Kriterien der Prüfvorschrift. Bei der Bewertungskennzahl 4 liegt ein deutlicher optischer Fehler nach dem Test vor, die Bewertungszahl 7 entspricht einer leichten Veränderung nach dem Test. Vollständig unveränderte Oberflächen werden mit den Kennzahlen 9 und 10 bewertet.

**Tabelle 1**

| **Komponenten [Gew.-%]** | **1 (Vgl.)** | **2** | **3** | **4 (Vgl.)** | **5 (Vgl.)** | **6 (Vgl.)** | **7 (Vgl.)** |
|---|---|---|---|---|---|---|---|
| A-1 | 69,91 | 66,60 | 63,58 | 66,60 | 63,58 | 63,58 | 63,58 |
| B-1 | 2,99 | 2,84 | 2,71 | 2,84 | 2,71 | 2,71 | 2,71 |
| B-3 | 18,65 | 17,76 | 16,96 | 17,76 | 16,96 | 16,96 | 16,96 |
| B-4 | 3,94 | 3,75 | 3,58 | 3,75 | 3,58 | 3,58 | 3,58 |
| B-5 | 2,99 | 2,84 | 2,71 | 2,84 | 2,71 | 2,71 | 2,71 |
| C-1 | | 4,74 | 9,05 | | | | |
| C-2 | | | | 4,74 | 9,05 | | |
| C-3 | | | | | | 9,05 | |
| C-4 | | | | | | | 9,05 |
| D-1 | 0,20 | 0,19 | 0,18 | 0,19 | 0,18 | 0,18 | 0,18 |
| D-2 | 0,10 | 0,09 | 0,09 | 0,09 | 0,09 | 0,09 | 0,09 |
| D-5 | 0,74 | 0,70 | 0,67 | 0,70 | 0,67 | 0,67 | 0,67 |
| D-7 | 0,50 | 0,47 | 0,45 | 0,47 | 0,45 | 0,45 | 0,45 |

| **Eigenschaften** | | | | | | | |
|---|---|---|---|---|---|---|---|
| Ausgangsglanz 60° | 107 | 106 | 107 | 106 | 106 | 107 | 107 |
| Abnahme des Glanzes 60° [%] | 32 | 12 | 8 | - | 11 | 12 | 10 |
| Thermische Stabilität MVR (5min → 15min) [%] | 38 | 31 | 37 | 96 | 187 | 176 | 68 |
| Sonnencreme Beständigkeit Visuelle Bewertung | 4 | - | 4 | - | 4 | 4 | 4 |

**Tabelle 2: Formmassen und ihre Eigenschaften**

| **Komponenten [Gew.-%]** | **8 (Vgl.)** | **9** | **10** | **11** | **12 (Vgl.)** | **13 (Vgl.)** | **14 (Vgl.)** |
|---|---|---|---|---|---|---|---|
| A-2 | 48,52 | 46,05 | 43,58 | 41,11 | 46,05 | 43,58 | 41,11 |
| A-3 | 29,84 | 28,32 | 26,81 | 25,29 | 28,32 | 26,81 | 25,29 |
| A-4 | 9,95 | 9,44 | 8,93 | 8,43 | 9,44 | 8,93 | 8,43 |
| B-2 | 9,95 | 9,44 | 8,93 | 8,43 | 9,44 | 8,93 | 8,43 |
| C-1 | | 5,00 | 10,01 | 15,01 | | | |
| C-2 | | | | | 5,00 | 10,01 | 15,01 |
| D-1 | 0,10 | 0,10 | 0,10 | 0,10 | 0,10 | 0,10 | 0,10 |
| D-3 | 0,03 | 0,03 | 0,03 | 0,03 | 0,03 | 0,03 | 0,03 |
| D-4 | 0,20 | 0,20 | 0,20 | 0,20 | 0,20 | 0,20 | 0,20 |
| D-5 | 0,80 | 0,80 | 0,80 | 0,80 | 0,80 | 0,80 | 0,80 |
| D-6 | 0,10 | 0,10 | 0,10 | 0,10 | 0,10 | 0,10 | 0,10 |
| D-7 | 0,50 | 0,50 | 0,50 | 0,50 | 0,50 | 0,50 | 0,50 |

| **Eigenschaften** | | | | | | | |
|---|---|---|---|---|---|---|---|
| Ausgangsglanz 60° | 100 | 98 | 99 | 100 | 95 | 98 | 98 |
| Abnahme des Glanzes 60° [%] | 45 | 14 | 12 | 11 | 30 | 26 | 24 |
| Thermische Stabilität MVR (5min → 15min) [%] | 19 | 17 | 26 | - | 29 | 50 | - |
| Sonnencreme Beständigkeit Visuelle Bewertung | 7 | - | 7 | - | - | 7 | - |

Aus Tabelle 1 und 2 ist ersichtlich, dass nur die Zusammensetzungen enthaltend Quarzgut als anorganischer Füllstoff die erfindungsgemäße Aufgabe lösen, d.h. nur die erfindungsgemäße Zusammensetzungen gemäß Beispiel 2 und 3 (Tabelle 1) und die erfindungsgemäße Zusammensetzungen gemäß der Beispiele 9-11 (Tabelle 2) eine Kombination aus höhere thermischer Verarbeitungsstabilität und höhere Kratzfestigkeit aufweisen. Zusätzlich zeigt das erfindungsgemäße Beispiel 10 eine verbesserte Sonnencremebeständigkeit.

## Patentansprüche

1. Zusammensetzungen enthaltend
A) 50 bis 90 Gew.-% mindestens eines Polymers ausgewählt aus der Gruppe bestehend aus aromatisches Polycarbonat auf Basis von Bisphenol A mit einer gewichtsgemittelten Molmasse M_{w} von 24 kg/mol bis 33 kg/ mol bestimmt durch Gelpermeationschromatographie in Methylenchlorid mit Polycarbonat als Standard, aromatisches Polyestercarbonat und Polyester,
B) 5 bis 40 Gew.-% mindestens eines kautschukmodifizierten Pfropfpolymerisats,
C) 1 bis 20 Gew.-% Quarzgut mit einer mittleren Partikelgröße d₅₀, die wie im experimentellen Teil der Beschreibung erläutert gemessen wird, von 1,0 bis 10,0 µm und einem Gehalt an Metalloxiden ≤ 2 Gew.-% bezogen auf Komponente C.
D) 0 bis 20 Gew.-% mindestens eines von Komponente C verschiedenen Additivs.

2. Zusammensetzungen gemäß Anspruch 1, wobei die Komponente B ein Pfropfpolymerisat hergestellt im Emulsionspolymersiationsverfahren mit einem Butadienkautschuk als Pfropfgrundlage und einer Pfropfauflage aus Methylmethacrylat oder einem Styrol-Acrylnitril Copolymer enthält.

3. Zusammensetzungen gemäß einem der vorherigen Ansprüche, wobei die Komponente C einen Gehalt von Aluminiumoxid von ≤ 1 Gew.-% aufweist.

4. Zusammensetzungen gemäß einem der vorherigen Ansprüche, wobei die Komponente C einen Fe₂O₃ Gehalt von ≤ 0,1 Gew.-% aufweist.

5. Zusammensetzungen gemäß einem der vorherigen Ansprüche, wobei die Komponente C eine mittlere Partikelgröße d₅₀, die wie im experimentellen Teil der Beschreibung erläutert gemessen wird, von 3 bis 5 µm aufweist.

6. Zusammensetzungen gemäß einem der vorherigen Ansprüche, wobei die Komponente C einen pH-Wert, gemessen nach DIN ISO 10390, von 5 bis 6,5 aufweist.

7. Zusammensetzungen gemäß einem der vorherigen Ansprüche, wobei die Komponente C eine spezifische BET-Oberfläche, bestimmt durch Stickstoffadsorption gemäß ISO 9277, von 2,0 m²/g bis 8,0 m²/g aufweist.

8. Zusammensetzungen gemäß einem der vorherigen Ansprüche, wobei die Komponente A nur aromatisches Polycarbonat auf Basis von Bisphenol A mit einer gewichtsgemittelten Molmasse M_{w} von 24 kg/mol bis 33 kg/ mol bestimmt durch Gelpermeationschromatographie in Methylenchlorid mit Polycarbonat als Standard und die Komponente B ein kautschukmodifiziertes Pfropfpolymerisat hergestellt in Emulsionspolymerisation und mindestens ein Polymer, ausgewählt aus kautschukmodifiziertem Pfropfpolymerisat, hergestellt im Masse-, Lösungs- oder Suspensionspolymerisationsverfahren und kautschukfreiem Vinyl(co)polymerisat, umfasst.

9. Zusammensetzungen gemäß einem der Ansprüche 1 bis 7, wobei die Komponente A aromatisches Polycarbonat auf Basis von Bisphenol A mit einer gewichtsgemittelten Molmasse M_{w} von 24 kg/mol bis 33 kg/ mol bestimmt durch Gelpermeationschromatographie in Methylenchlorid mit Polycarbonat als Standard und Polyalkylenterephthalat oder eine Mischung von mehreren Polyalkylenterephthalaten enthält und die Komponente B nur aus kautschukmodifiziertem Pfropfpolymerisat hergestellt in Emulsionspolymerisation besteht.

10. Zusammensetzungen gemäß Anspruch 9, wobei als Polyalkylenterephthalat Polybutylenterephthalat verwendet wird.

11. Zusammensetzungen gemäß einem der Ansprüche 1 bis 7 und 9 bis 10, wobei der Polyester in einem Anteil von 20 bis 45 Gew.-% bezogen auf die anspruchsgemäßen Zusammensetzungen enthalten ist.

12. Zusammensetzungen gemäß einem der vorherigen Ansprüche enthaltend 5 bis 15 Gew.-% kautschukmodifiziertes Pfropfpolymerisat hergestellt in Emulsionspolymerisation.

13. Verwendung von Zusammensetzungen gemäß einem der Ansprüche 1 bis 12 zur Herstellung von Formkörpern.

14. Formkörper erhältlich aus Zusammensetzungen gemäß einem der Ansprüche 1 bis 12.

## Claims

1. Compositions comprising
A) 50% to 90% by weight of at least one polymer selected from the group consisting of aromatic polycarbonate based on bisphenol A having a weight-average molar mass M_{w} of 24 kg/mol to 33 kg/mol determined by gel permeation chromatography in methylene chloride with a polycarbonate standard, aromatic polyestercarbonate and polyester,
B) 5% to 40% by weight of at least one rubber-modified graft polymer,
C) 1% to 20% by weight of fused silica having an average particle size d₅₀ measured as described in the experimental section of the description of 1.0 to 10.0 µm and a content of metal oxides ≤ 2% by weight based on component C,
D) 0% to 20% by weight of at least one additive distinct from component C.

2. Compositions according to Claim 1, wherein component B comprises a graft polymer produced in the emulsion polymerization process with a butadiene rubber as the graft substrate and a graft superstrate made of methyl methacrylate or a styrene-acrylonitrile copolymer.

3. Compositions according to either of the preceding claims, wherein component C has a content of aluminium oxide of ≤ 1% by weight.

4. Compositions according to any of the preceding claims, wherein component C has an Fe₂O₃ content of ≤ 0.1% by weight.

5. Compositions according to any of the preceding claims, wherein component C has an average particle size d₅₀ measured as described in the experimental section of the description of 3 to 5 µm.

6. Compositions according to any of the preceding claims, wherein component C has a pH measured according to DIN ISO 10390 of 5 to 6.5.

7. Compositions according to any of the preceding claims, wherein component C has a specific BET surface area determined by nitrogen adsorption according to ISO 9277 of 2.0 m²/g to 8.0 m²/g.

8. Compositions according to any of the preceding claims, wherein component A comprises only aromatic polycarbonate based on bisphenol A having a weight-average molar mass M_{w} of 24 kg/mol to 33 kg/mol determined by gel permeation chromatography in methylene chloride with a polycarbonate standard and component B comprises a rubber-modified graft polymer produced in emulsion polymerization and at least one polymer selected from rubber-modified graft polymer produced in the bulk, solution or suspension polymerization process and rubber-free vinyl (co)polymer.

9. Compositions according to any of Claims 1 to 7, wherein component A comprises aromatic polycarbonate based on bisphenol A having a weight-average molar mass M_{w} of 24 kg/mol to 33 kg/mol determined by gel permeation chromatography in methylene chloride with a polycarbonate standard and polyalkylene terephthalate or a mixture of a plurality of polyalkylene terephthalates and component B consists only of rubber-modified graft polymer produced in emulsion polymerization.

10. Compositions according to Claim 9, wherein the polyalkylene terephthalate used is polybutylene terephthalate.

11. Compositions according to any of Claims 1 to 7 and 9 to 10, wherein the polyester is present in a proportion of 20% to 45% by weight based on the claimed compositions.

12. Compositions according to any of the preceding claims comprising 5% to 15% by weight of rubber-modified graft polymer produced in emulsion polymerization.

13. Use of compositions according to any of Claims 1 to 12 for the production of moulded articles.

14. Moulded articles obtainable from compositions according to any of Claims 1 to 12.

## Revendications

1. Compositions contenant
A) 50 à 90 % en poids d'au moins un polymère choisi dans le groupe constitué par un polycarbonate aromatique à base de bisphénol A doté d'une masse molaire moyenne en poids M_{w} de 24 kg/mole à 33 kg/mole déterminée par chromatographie à perméation de gel dans du chlorure de méthylène avec un polycarbonate en tant que référence, un polyestercarbonate aromatique et un polyester,
B) 5 à 40 % en poids d'au moins un polymère greffé modifié par un caoutchouc,
C) 1 à 20 % en poids de silice vitreuse dotée d'une taille moyenne de particule dso, qui est mesurée comme expliqué dans la partie expérimentale de la description, de 1,0 à 10,0 µm et d'une teneur en oxydes métalliques ≤ 2 % en poids par rapport au composant C,
D) 0 à 20 % en poids d'au moins un additif différent du composant C.

2. Compositions selon la revendication 1, le composant B contenant un polymère greffé préparé dans un procédé de polymérisation en émulsion avec un caoutchouc de butadiène en tant que base de greffage et un revêtement de greffage composé de méthacrylate de méthyle ou d'un copolymère de styrène-acrylonitrile.

3. Compositions selon l'une quelconque des revendications précédentes, le composant C présentant une teneur en oxyde d'aluminium de ≤ 1 % en poids.

4. Compositions selon l'une quelconque des revendications précédentes, le composant C présentant une teneur en Fe₂O₃ de ≤ 0,1 % en poids.

5. Compositions selon l'une quelconque des revendications précédentes, le composant C présentant une taille moyenne de particule dso, qui est mesurée comme expliqué dans la partie expérimentale de la description, de 3 à 5 pm.

6. Compositions selon l'une quelconque des revendications précédentes, le composant C présentant une valeur de pH, déterminée selon la norme DIN ISO 10390, de 5 à 6,5.

7. Compositions selon l'une quelconque des revendications précédentes, le composant C présentant une surface spécifique BET, déterminée par adsorption d'azote selon la norme ISO 9277, de 2,0 m²/g à 8,0 m²/g.

8. Compositions selon l'une quelconque des revendications précédentes, le composant A comprenant seulement un polycarbonate aromatique à base de bisphénol A doté d'une masse molaire moyenne en poids M_{w} de 24 kg/mole à 33 kg/mole déterminée par chromatographie à perméation de gel dans du chlorure de méthylène avec un polycarbonate en tant que référence et le composant B comprenant un polymère greffé modifié par un caoutchouc préparé par polymérisation en émulsion et au moins un polymère, choisi parmi un polymère greffé modifié par un caoutchouc, préparé par un procédé de polymérisation en masse, en solution ou en suspension et un (co)polymère vinylique exempt de caoutchouc.

9. Compositions selon l'une quelconque des revendications 1 à 7, le composant A contenant un polycarbonate aromatique à base de bisphénol A doté d'une masse molaire moyenne en poids M_{w} de 24 kg/mole à 33 kg/mole déterminée par chromatographie à perméation de gel dans du chlorure de méthylène avec un polycarbonate en tant que référence et un poly(téréphtalate d'alkylène) ou un mélange de plusieurs poly(téréphtalate d'alkylène) et le composant B étant seulement constitué d'un polymère greffé modifié par un caoutchouc préparé par polymérisation en émulsion.

10. Compositions selon la revendication 9, un poly(téréphtalate de butylène) étant utilisé en tant que poly(téréphtalate d'alkylène).

11. Compositions selon l'une quelconque des revendications 1 à 7 et 9 à 10, le polyester étant contenu en une proportion de 20 à 45 % en poids par rapport aux compositions selon les revendications.

12. Compositions selon l'une quelconque des revendications précédentes contenant 5 à 15 % en poids d'un polymère greffé modifié par un caoutchouc préparé par polymérisation en émulsion.

13. Utilisation de compositions selon l'une quelconque des revendications 1 à 12 pour la préparation de corps moulés.

14. Corps moulé pouvant être obtenu à partir de compositions selon l'une quelconque des revendications 1 à 12.
